# EUROPEAN PATENT SPECIFICATION

(11) **EP 2 515 567 B1**
(45) Date of publication and mention of the grant of the patent: **21.09.2016**
(21) Application number: 12164137.7
(22) Date of filing: 13.04.2012
(51) Int. Cl.: H04W 12/06, H04L 29/06, H04L 9/32, G06F 21/34, G06Q 20/38

(54) **Apparatus and method for authenticating a transaction between a user and an entity**
Vorrichtung und Verfahren zur Authentifizierung einer Transaktion zwischen einem Benutzer und einer Entität
Appareil et procédé pour authentification d'une transaction entre un utilisateur et une entité

(30) Priority: 20.04.2011 GB 201106648
(43) Date of publication of application: 24.10.2012
(73) Proprietor: Vodafone IP Licensing Limited, Newbury, Berkshire RG14 2FN (GB)
(72) Inventor: Wheeler, Scott, Newbury, Berkshire RG14 2FN (GB)
(74) Representative: Boult Wade Tennant

(56) References cited:
- EP-A2- 2 466 843
- WO-A1-01/31840
- WO-A1-2004/054297
- WO-A1-2010/000455
- US-A1- 2007 118 745

## Description

### TECHNICAL FIELD

The present invention relates to apparatus for authenticating a transaction between a user and an entity. The present invention also relates to a method for authenticating a transaction between a user and an entity.

### BACKGROUND TO THE INVENTION

Often transactions are authenticated between a user and an entity by the user providing that entity with a password or PIN which is in principle known only to the user and the entity. A problem with such authentication arrangements is that the password or PIN may become known to an unauthorised person, who may then be able to illegitimately perform transactions which appear to the entity to be requested by the user.

It is known to improve such authentication arrangements by using so-called "one-time" or "dynamic" passwords (hereinafter "authentication codes") that are valid for only one transaction. With such an arrangement, even if the authentication code is intercepted, the interception of the authentication code will not facilitate illegitimate performance of transactions after the authentication code has been used once.

It is known to provide a bank account holder with a Chip Authentication Program (CAP) device (or a similarly functioning device, or "token") to authenticate a transaction. The token includes a reader for receiving and reading the chip of the user's bank card. The chip of a user's bank card stores a key that is specific to that user (known as a "seed") and the user's PIN number, both of which are known to be allocated to that user by the bank. The token includes a memory which stores the authentication code used for the previous transaction.

The token also includes a numerical keypad and a display. A processor of the token implements an algorithm which, using the display, prompts the user to insert their bank card into the token and to enter their PIN when they wish to perform a transaction. The processor passes the PIN to the chip of the bank card. The chip of the bank card then verifies whether the PIN is correct. The verification of the PIN then permits the token to request an authentication code from the bank card. The processor of the bank card then produces an authentication code for the new transaction based on the seed stored on the chip of the user's bank card and on a combination of one or both of the current time and authentication history data which was calculated and stored on the bank card at the previous authentication transaction. The authentication code is then displayed on the display at the token for use in performing the transaction.

Tokens of the type described above are used to authenticate transactions such as the transfer of money between bank accounts over the Internet. In order to perform such a transaction, the user will access the bank's website. The user identifies themselves by entering their user ID. The user may be asked to enter other information identifying themselves. Additionally, the user is then prompted to use their bank card and token to provide an authentication code. The user then follows the procedure outlined above. The user enters their PIN when they wish to perform a transaction. The processor passes the PIN to the chip of the bank card. The chip of the bank card then verifies whether the PIN is correct. The verification of the PIN then permits the token to request an authentication code from the bank card. The processor of the bank card then produces an authentication code for the new transaction based on the seed stored on the chip of the user's bank card and on a combination of one or both of the current time and authentication history data which was calculated and stored on the bank card at the previous authentication transaction. The authentication code is then displayed on the display at the token for use in performing the transaction. The authentication code is then displayed on the display of the token. The user then enters the displayed authentication code when prompted by the bank website in order to authenticate the transaction. The entered authentication code is passed via the Internet to an authentication manager of the bank, together with the user ID. The authentication code is then stored on the token for use in authenticating the next transaction.

The user ID is checked by the authentication manager and the authentication code is provided to the authentication manager for validation. The authentication manager includes its own tamper resistant database of valid user IDs and seeds. The authentication manager also stores for each user ID the authentication history data which was calculated and stored during the last successful transaction. The authentication manager uses the same algorithm as the token to compute what the next authentication code should be. The authentication manager retrieves from the database, using the supplied user ID, the seed for that user and a combination of one of both of the current time and the authentication history data from the last transaction by that user. The algorithm then calculates the authentication code based on the previous authentication code and the seed. If the authentication codes match, then the user is considered to be authenticated. Matching of the authentication codes indicates that the user (1) is in possession of their bank card and (2) knows their PIN. This is known as two-factor authentication, as both the bank card and the valid PIN must be present for the transaction to succeed. If the authentication codes match, then the authentication manager allows a transaction requested via the bank website to be completed. Advantageously, the PIN is not transmitted to the bank, so it cannot be intercepted and used illegitimately.

Whilst such a token provides a relatively secure arrangement for authenticating transactions, it does require the user to carry the authentication token with them at any time at which they may wish to perform a transaction. Some users find this inconvenient.

WO2010/000455 discloses a mobile telecommunications device which generates a time-synchronised one-time password using a secret key that may be stored on the smartcard associated with the mobile telecommunications device.

WO01/31840 discloses a mobile telecommunications device that can be used to generate a one-time password. The password may be dependent upon a subscribed identifier which is stored one a subscriber identification module associated with the mobile telecommunications device.

WO2004/054297 discloses a mobile telecommunications device and a SIM which are used for one-time password generation. The one-time password is generated using secret data from the SIM card in combination with other data stored on the mobile telecommunications device.

US2007/118745 discloses a multi-factor authentication arrangement using a smartcard that is associated with a secure processing device that is in turn associated with a computing device, which may be a wireless phone.

### SUMMARY OF THE INVENTION

According to a first aspect of the present invention, there is provided apparatus for authenticating a transaction between a user and an entity, the apparatus including cellular telecommunications network subscriber identity module, SIM, means adapted to store a seed for generating an authentication code which is usable to authenticate the transaction, and a mobile telecommunications device having a processor including authentication means operable to obtain the seed from the SIM means, to calculate the authentication code and to generate a transaction message for enabling the transaction with the entity, the transaction message including the authentication code, wherein the SIM means is operable to be registered with the cellular telecommunications network for which the user has a mobile telecommunications device and includes information which is usable to authenticate the user's mobile telecommunications device with the cellular telecommunications network to obtain telecommunications services therefrom, characterised in that the apparatus is operable to only provide the seed when the SIM means is registered with the cellular telecommunications network

Many people carry with them always a mobile telecommunications device, which includes a SIM. By using this mobile device and SIM to authenticate transactions, a highly convenient arrangement for authenticating transactions is provided which does not require the user to carry any separate special token. A mobile device and SIM which the user already carries, for the conventional purpose of obtaining telecommunications services, is used to perform authentication of transactions.

It is advantageous to use a SIM for authenticating transactions as SIMs operating in accordance with the GSM and UMTS Standards (for example) are highly secure. However, SIMs typically have very limited storage and processing power. A conventional SIM may typically have 64KB of storage and 2KB of RAM. Of the 64KB storage, typically 10KB is free. The free space is very limited, and it is therefore difficult to provide additional applications on the SIM, unless these are very small.

A SIM used to authenticate transactions (for example with a user's bank), such that the SIM itself would facilitate generation of a one-time or dynamic password, could be used in replacement of a Chip Authentication Program (CAP) device or other token. However, as a user may have a bank account with one or more of a multiplicity of banks that provide services in the region in which the cellular network which issues the SIM operates, this would require a large number of authentication applications to be present on the SIM. Further, the authentication applications are likely to be too large to be stored on the limited storage capacity of the SIM. One option to overcome this difficulty would be to increase the storage and RAM provided on a SIM. However, as many millions of SIMs are issued by cellular networks, this would be a very expensive exercise.

In the embodiments to be described by way of example below, a conventional SIM (for example, in accordance with the GSM or UMTS Standards) is modified so that it can store a "seed" that is similar to the type discussed above.

Advantageously, the embodiments of the present invention store a seed (useable for generating an authentication code) on the SIM for each possible banking entity. The seeds for multiple banking entities can comfortably be stored on the SIM.

The apparatus may include a store for storing authentication history data which was calculated while calculating the authentication code for the previous transaction. The authentication history data may be identical to (or may be derived in some other way from) the previous authentication code. Authentication means may calculate the authentication code such that it is derived from the seed and one or both of the current time and the authentication history data. Advantageously, this is one way of ensuring that the authentication code is different for each transaction, and therefore enhances security.

The store for storing authentication history data may be provided by the authentication means entity, or may be provided on the SIM.

Storage of the seeds on the SIM provides enhanced security. It also permits the user to change mobile devices without obtaining new seeds.

Storage of the authentication history data on the SIM provides enhanced security. It also permits the user to change mobile devices without resynchronising the authentication history data with authentication managers.

The much greater storage and RAM available on the mobile device is used to store a respective application for generating authentication codes and for performing transactions with each possible banking entity. Using the mobile device to generate the authentication code avoids the need for the user to be provided with a CAP device or token for each banking entity that they use.

The SIM means may be operable to verify the integrity of the authentication means. This too enhances security. In the embodiment the SIM means stores one or more cryptographic nonces (number used once) together with the corresponding cryptographic hashes of the combination of the nonce and the algorithm used by the authentication means calculated when the authentication means algorithm was in a known, legitimate form. In the embodiment, when the authentication means requests the seed, and status data from the SIM means, the authentication means calculates a hash of the combination of a nonce provided by the SIM and its algorithm and sends this with the request for the seed and status data to the SIM. The SIM then compares the received hash value with its stored hash value for that nonce. If the hash values match, this indicates that the authentication means is in its legitimate form and has not been modified. Other forms of integrity protection may also be used.

The SIM means may include means operable to encrypt the seed and authentication history data, and the authentication means may include corresponding means for decrypting the seed and authentication history data. The seed and authentication history data can then be transmitted between the SIM means and the authentication means in encrypted form to enhance security. The encryption/decryption may be performed by a public-private key pair or a shared secret key, or any other suitable mechanism.

The SIM means may be operable to receive and verify a request message for the seed and authentication history data prior to providing the seed and authentication history data to the authentication means. This also enhances security. By verifying the seed request message, the SIM means will not inadvertently transmit the seed in response to an illegitimate request. The message requesting the seed and authentication history data may be encrypted by a shared secret key, and the verification may be performed by attempting to decrypt the seed request message. Alternatively the message requesting the seed and authentication history data may be signed using a public-private key such that the signature indicates that the request message originated from a trusted source that knows the key.

The SIM is operable to be registered with a cellular telecommunications network for which the user has the mobile telecommunications device, the SIM including information which is usable to authenticate the user's mobile telecommunications device with the cellular telecommunications network to obtain telecommunications services therefrom, such as voice calls, data communication sessions, SMS transmission etc.

The SIM may be operable to authenticate the user by a challenge and response mechanism in accordance with the GSM and UMTS Standards (for example), such that registration with the cellular telecommunications network is only possible after satisfactory authentication has been performed.

The apparatus will only generate the authentication code when the SIM means is registered with the cellular telecommunications network. This provides enhanced security as, to perform the transaction, not only does the user have to be in possession of SIM means storing the seed, but the SIM means must also be capable of authentication with the cellular telecommunications network and registration with the cellular telecommunications network.

Although in the embodiments the transaction is with a bank, the transaction may merely involve the exchange of information. For example, the user may simply need to be authenticated in order to download information from the third party. Such information may be information kept by the third party on behalf of the user (for example, information relating to the user's bank account). Instead, the information might be information held on a data network belonging to an organisation or commercial entity with which the user is connected or by whom the user is employed, thus facilitating access to that network by the user when the user is travelling. Another possible transaction may involve the downloading of software from the remote location. In addition, the transaction may require a payment to be made by the user in order to enable the transaction to take place, such as a payment to the third party in return for the information provided.

The present invention also provides a method for authenticating a transaction between a user and an entity, as defined in the claims.

### BRIEF DESCRIPTION OF THE DRAWINGS

For a better understanding of the present invention embodiments will now be described by way of example, with reference to the accompanying drawings, in which:
Figure 1 is a diagrammatic drawing of key elements of a network including a mobile telecommunications network and a bank;
Figure 2 is a diagrammatic drawing showing in more detail some of the elements shown in Figure 1;
Figures 3A and B are a flow chart showing a first embodiment of the invention;
Figure 4 is a diagram showing the messages transmitted between the mobile terminal and associated SIM in accordance with the first embodiment of the invention;
Figures 5A and B are a flow chart showing a second embodiment of the invention;
Figure 6 is a diagram showing the messages transmitted between the mobile terminal and associated SIM in accordance with the second embodiment of the invention;
Figures 7A,B and C are a flow chart showing a third embodiment of the invention;
Figure 8 is a diagram showing the messages transmitted between the mobile terminal and associated SIM in accordance with the third embodiment of the invention;
Figures 9A,B and C are a flow chart showing a fourth embodiment of the invention;
Figure 10 is a diagram showing the messages transmitted between the mobile terminal and associated SIM in accordance with the fourth embodiment of the invention; and
Figures 11A and B are a flow chart showing a fifth embodiment of the invention.

In the drawings like elements are generally designated with corresponding reference signs.

### DETAILED DESCRIPTION OF EMBODIMENTS OF THE INVENTION

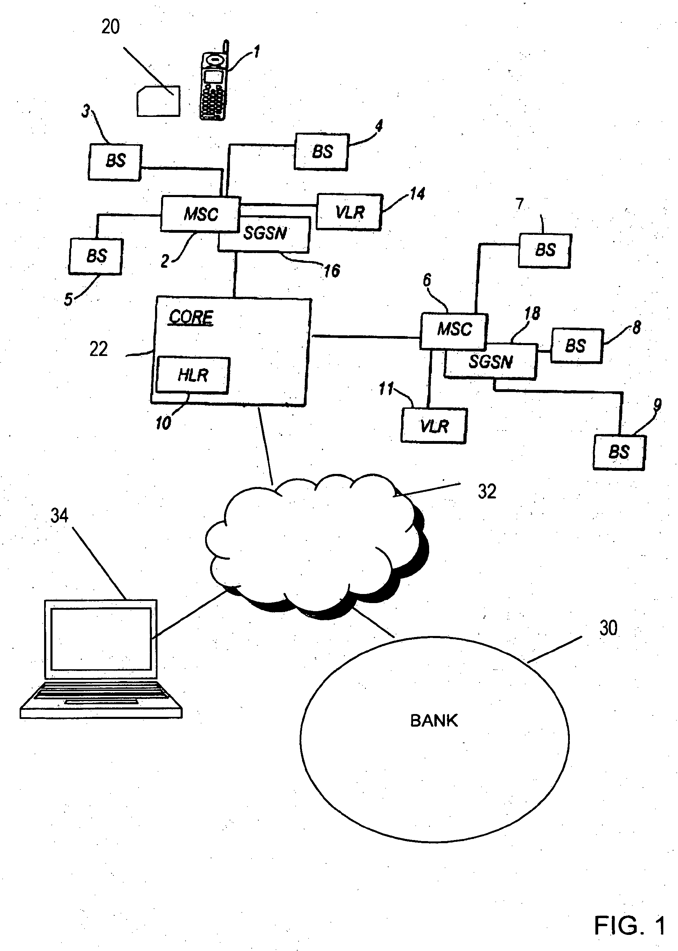

Key elements of a mobile telecommunications network, and its operation, will now briefly be described with reference to Figure 1.

Each base station (BS) corresponds to a respective cell of its cellular or mobile telecommunications network and receives calls from and transmits calls to a mobile terminal in that cell by wireless radio communication in one or both of the circuit switched or packet switched domains. Such a subscriber's mobile terminal is shown at 1. The mobile terminal may be a handheld mobile telephone.

In a GSM mobile telecommunications network, each base station comprises a base transceiver station (BTS) and a base station controller (BSC). A BSC may control more than one BTS. The BTSs and BSCs comprise the radio access network.

In a UMTS mobile telecommunications network, each base station comprises a node B and a radio network controller (RNC). An RNC may control more than one node B. The node B's and RNC's comprise the radio access network.

In the proposed LTE mobile telecommunications network, each base station comprises an eNode B. The base stations are arranged in groups, and each group of base stations is controlled by a Mobility Management Entity (MME) and a User Plane Entity (UPE).

Conventionally, the base stations are arranged in groups and each group of base stations is controlled by one mobile switching centre (MSC), such as MSC 2 for base stations 3, 4 and 5. As shown in Figure 1, the network has; another MSC 6, which is controlling a further three base stations 7, 8 and 9. In practice, the network will incorporate many more MSCs and base stations than shown in Figure 1. The base stations 3, 4, 5, 7, 8 and 9 each have dedicated connection to their MSC 2 or MSC 6 - typically a cable connection.

The MSCs 2 and 6 support communications in the circuit switched domain - typically voice calls. Corresponding SGSNs 16 and 18 are provided to support communications in the packet switched domain - such as GPRS data transmissions. The SGSNs 16 and 18 function in an analogous way to the MSCs 2 and 6. The SGSNs 16, 18 are equipped with an equivalent to the VLRs 11, 14 used in the packet switched domain.

Each subscriber to the network is provided with a smart card or SIM 20 which, when associated with the user's mobile terminal 1 identifies the subscriber to the network. The SIM card is pre-programmed with a unique identification number, the "International Mobile Subscriber Identity" (IMSI) that is not visible on the card and is not known to the subscriber. The subscriber is issued with a publicly known number, that is, the subscriber's telephone number, by means of which callers initiate calls to the subscriber. This number is the MSISDN.

The network includes a home location register (HLR) 10 which, for each subscriber to the network, stores the IMSI and the corresponding MSISDN together with other subscriber data, such as the current or last known MSC or SGSN of the subscriber's mobile terminal.

When mobile terminal 1 is activated, it registers itself in the network by transmitting the IMSI (read from its associated SIM card 20) to the base station 3 associated with the particular cell in which the terminal 1 is located. In a traditional network, the base station 3 then transmits this IMSI to the MSC 2 with which the base station 3 is registered. In a network using the functionality described in 3GPP TS 23.236, the base station follows prescribed rules to select which MSC to use, and then transmits this IMSI to the selected MSC.

MSC 2 now accesses the appropriate storage location in the HLR 10 present in the core network 22 and extracts the corresponding subscriber MSISDN and other subscriber data from the appropriate storage location, and stores it temporarily in a storage location in a visitor location register (VLR) 14. In this way, therefore the particular subscriber is effectively registered with a particular MSC (MSC 2), and the subscriber's information is temporarily stored in the VLR (VLR 14) associated with that MSC.

When the HLR 10 is interrogated by the MSC 6 in the manner described above, the HLR 10 additionally performs an authentication procedure for the mobile terminal 1. The HLR 10 transmits authentication data to the MSC 2 in "challenge" and "response" forms. Using this data, MSC 6 passes a "challenge" to the mobile terminal 1 through base station 7. Upon receipt of this data, the mobile terminal 1 passes this data to its SIM and produces a "response". This response is generated using an encryption algorithm on the SIM and a unique key Ki on the SIM. The response is transmitted back to the MSC 6 which checks it against its own information for the subscriber which checks it against information that it has obtained for that subscriber from the HLR 10 in order to complete the authentication process. If the response from the mobile terminal 1 is as expected, the mobile terminal 1 is deemed authenticated. At this point the MSC 6 requests subscription data from the HLR 10. The HLR 10 then passes the subscription data to the VLR 14.

The authentication process will be repeated at regular intervals while the mobile terminal 1 remains activated and can also be repeated each time the mobile terminal makes or receives a call, if required. This authentication process confirms the identity of the user to the network, so the user can be charged for telecommunications services.

Each of the MSCs of the network (MSC 2 and MSC 6) has a respective VLR (14 and 11) associated with it and operates in the same way as already described when a subscriber activates a mobile terminal in one of the cells corresponding to one of the base stations controlled by that MSC.

When the subscriber using mobile terminal 1 wishes to make a call, they enter the telephone number of the called party in the usual manner. This information is received by the base station 3 and passed on to MSC 2. MSC 2 routes the call towards the called party. By means of the information held in the VLR 14, MSC 2 can associate the call with a particular subscriber and thus record information for charging purposes.

The functionality just described may also apply to the proposed LTE mobile telecommunications network, with its eNode Bs performing the functionality of the base stations and the MME/UPE performing the functionality of the MSCs/VLRs. It is also to be appreciated that the functionality just described is one example of a network in which the embodiments of the invention may be implemented.

In addition to a cellular telecommunications network, Figure 1 also shows a bank A 30. The user of the mobile device 1 may connect the bank A 30 via the internet 32 using their personal computer 34 and/or their mobile device 1.

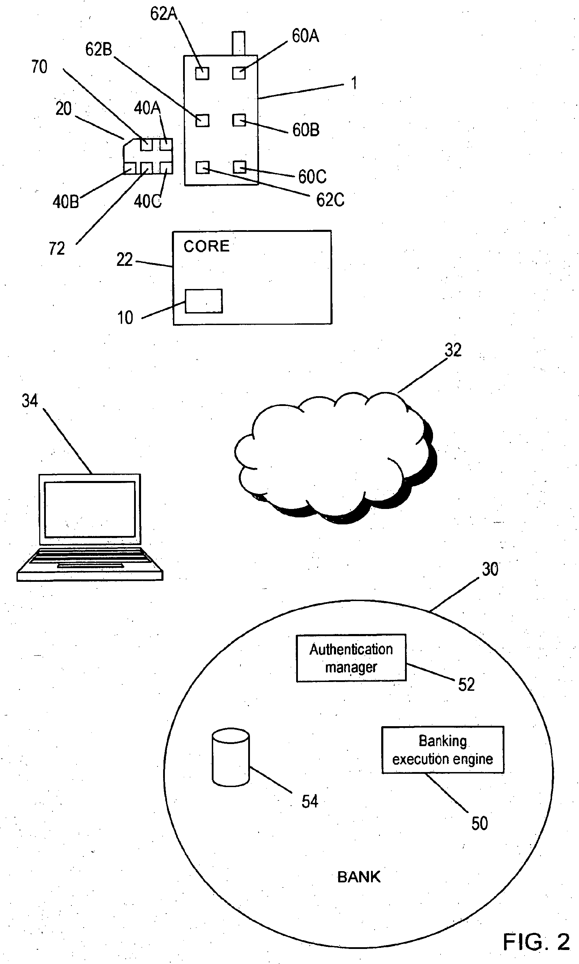

Embodiments of the present invention will now be described in detail referring, initially, to Figure 2, which shows in more detail some of the elements illustrated in Figure 1.

The SIM 20 of the embodiments is modified from a conventional SIM to include a store 40A which stores a random key or "seed" that is allocated to the particular user of that SIM 20. The seed may be provided to the store 40A before the SIM 20 is distributed to the user. Alternatively, the seed may be pushed wirelessly over the cellular telecommunications network to the SIM 20 from the core 22 (via the mobile device 1), whereafter it is stored in the store 40A. The seed is preferably transmitted on a packet switched communication session following authentication of the SIM 20 with the network core 22 in the manner described above.

The mobile device 1 is modified to include an authentication code calculator 60A which is operable to calculate an authentication code, that is dependent on the seed obtained from the seed store 40A and on one or both of the current time (obtained from a suitable time source) and previously calculated authentication history data, stored in authentication history data store 62A. The authentication code will therefore change each time a request for an authentication code is made.

Turning now to the bank 30, this includes a banking execution engine 50 which performs banking transactions, such as transferring funds between accounts.

The bank 30 further includes an authentication manager 52. The authentication manager 52 performs an algorithm which corresponds to the algorithm used in the mobile device 1 to calculate the authentication code. The authentication manager 52 has, for each user of the bank 30, details of a unique user ID for each user and the seed stored on the seed store 40A of the user's SIM 20. The user ID and seed for each user may be stored on database 54 which is accessible by the authentication manager 52. The database 54 also stores the most recently calculated authentication history data for that user, used in the last transaction (if applicable). If the current time is used for authentication, then a suitable time source is provided at the authentication manager 52. As the authentication manager 52 runs the same algorithm as the authentication code calculator 60A of the mobile device 1, if that algorithm is provided with the same seed (as stored in the seed store 40A of the SIM 20), and the authentication history data obtained from the database 54 corresponds to the same authentication history data (in the authentication history data store 62A) of the mobile device 1 (or the time sources provide the same current time), the authentication code generated by the authentication manager 52 will correspond to the authentication code generated by the authentication code calculator 60A of the mobile device 1.

In order to allow the mobile terminal 1 and SIM 20 to authenticate transactions with the various banks that provide services in the region where the cellular network provides telecommunications services, the SIM 20 and mobile device 1 also are potentially able to authenticate transactions with these other banks. The SIM 20 includes a second seed store 40B and a third seed store 40C. These seed stores 40B and 40C are able to store the seeds to other banks. The seed stores 40B and 40C may be provided with seeds for the other banks prior to distribution of the SIM 20 to the user. Alternatively, one or both of the seeds may be pushed wirelessly over the cellular telecommunications network to the SIM 20 from the core 22 (via the mobile device 1) after the SIM has been distributed to the user - for example, when such seeds are required.

The mobile device 1, in addition to the authentication code calculator 60A for use with the bank A 30, may also include a second authentication code calculator 60B and a third authentication code calculator 60C, for use with other banks. The second authentication code calculator 60B is provided with an associated second previous authentication history data store 62B, and a third authentication code calculator 60C is provided with a corresponding third previous authentication code store 62C.

The seed store 40B, authentication code calculator 40B and previous authentication history data store 62B operate in a similar manner to the seed store 40A, authentication code calculator 60A and authentication history data store 62A, described above, in order to authenticate transactions with another bank, bank B (not shown). Similarly, seed store 40C, authentication code calculator 60C and authentication history data store 62C operate in a similar manner to authenticate transactions with a third bank, bank C (not shown).

Facilities for performing transactions with more than three banks may be provided. Also, facilities for performing transactions with entities other than banks may also be provided. These are not described further for the sake of brevity.

Also, for the sake of brevity, the performance of transactions with just the first bank, bank A 30, will be described in detail. However, the SIM 20 mobile device 1 are capable of performing transactions with more than one entity, whether this be a bank or some other entity.

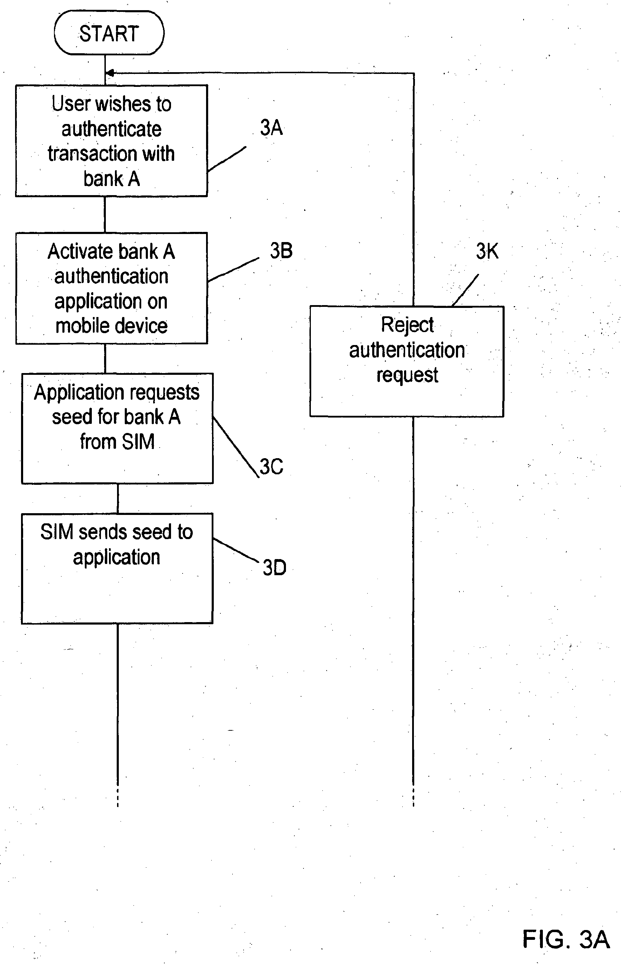

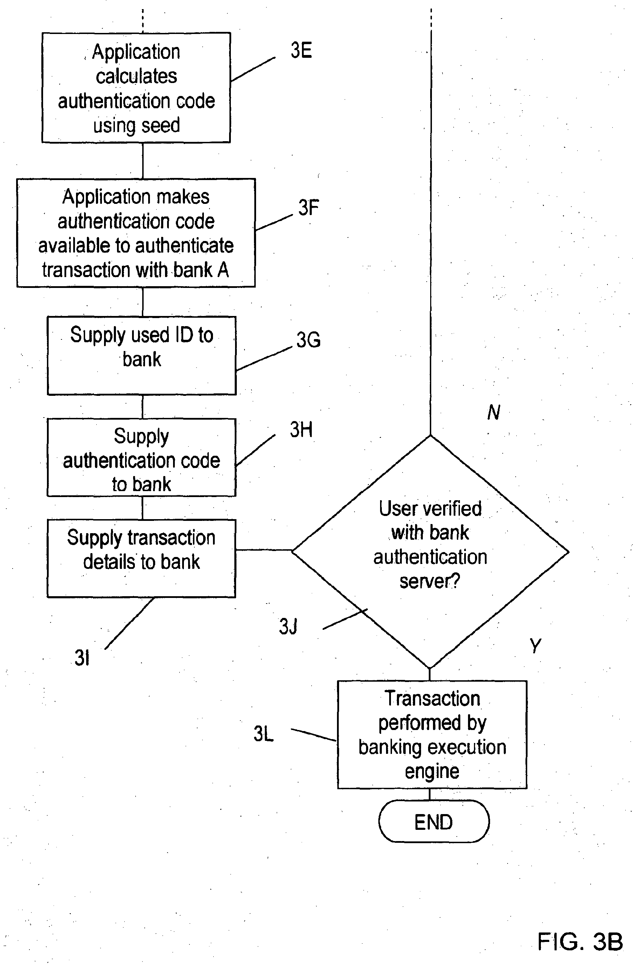

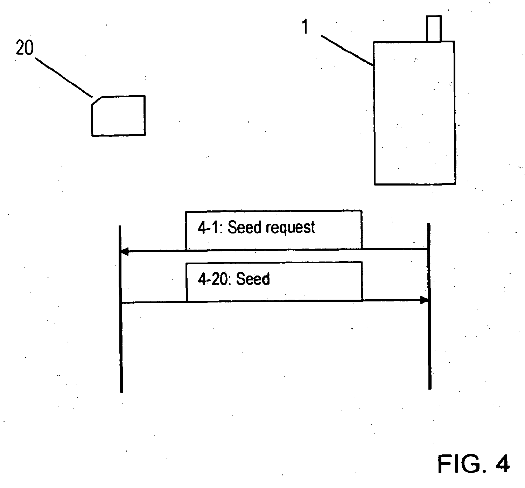

A first embodiment of the invention will now be described with reference to Figures 3 and 4.

At **step 3A** of Figure 3 the user wishes to authenticate a transaction with bank A 30. The transaction will typically be conducted by a user by interaction with their personal computer 34. The user accesses a web page provided by the bank A 30. In order to perform a transaction, the user is asked to enter their user ID. The user is also asked to provide an authentication code. Using the graphical user interface of the mobile device 1, the user activates an application 60A for performing transactions with bank A 30 from the available applications 60A,60B and 60C (**step 3B**).

The application 60A then generates a seed request message (**message 4-1**, Figure 4) which requests the seed for bank A 30 from the seed store 40A on the SIM 20 (**step 3C**).

In response to reception of the message from the application 60A, the seed store 40A provides the seed to the application 60A in reply **message 4-20 (step 3D).**

The application 60A then calculates an authentication code for performing the transaction using the seed obtained from the seed store 40A of the SIM 20, and also one or both of the current time and the authentication history data stored in authentication history data store 62A (**step 3E**).

The application 60A then makes the authentication code available to authenticate the transaction with bank A 30 (**step 3F**). The authentication code may conveniently be displayed to the user on the display of the mobile terminal 1. The user then enters this authentication code into the field indicated on the web page on their personal computer 34. The user ID allocated to the user by the bank A 30 is supplied to the bank A 30 in **step 3G** and the authentication code is supplied to the bank A 30 in **step 3H.** The details of the transaction are supplied to the bank A 30 in **step 3I**. Transaction details might include an amount of money to be transferred to a third party, and the account details of that third party.

At **step 3J** the authentication manager 52 of the bank A 30 receives the user ID, authentication code and transaction details via the internet 32. The authentication manager 52 uses the user ID to access records relevant to the user from the database 54. These records include the seed allocated to that user and the authentication code used to authenticate the previous transaction of that user. The authentication manager 52 then applies the seed and one or both of the current time and the stored authentication history data to an algorithm that corresponds to the algorithm used by the application 60A on the mobile device 1 in order to calculate a authentication code for the present transaction. As the algorithms used by the application 60A on the mobile device 1 and the authentication manager 52 at the bank A 30 are the same, if the seeds supplied to the respective algorithms and the authentication history data supplied to the respective algorithms are the same, the authentication code generated by the respective algorithms will also be identical.

At step 3J, the user is considered to be verified if the authentication code calculated by the authentication manager 52 of the bank A 30 is the same as the authentication code received from the application 60A of the mobile device 1. If the authentication codes do not match, then, at **step 3K,** the authentication request is rejected. The user of the mobile terminal 1 may be notified of the rejection of the authentication request by the graphical user interface of the mobile device 1. An indication of the reason for the rejection may be given to the user. The process then returns to step 3A.

If, at step 3J, the user is verified, the requested transaction is then performed by the banking execution engine 50 in response to an authentication approval message received from the authentication manager 52 (**step 3L**).

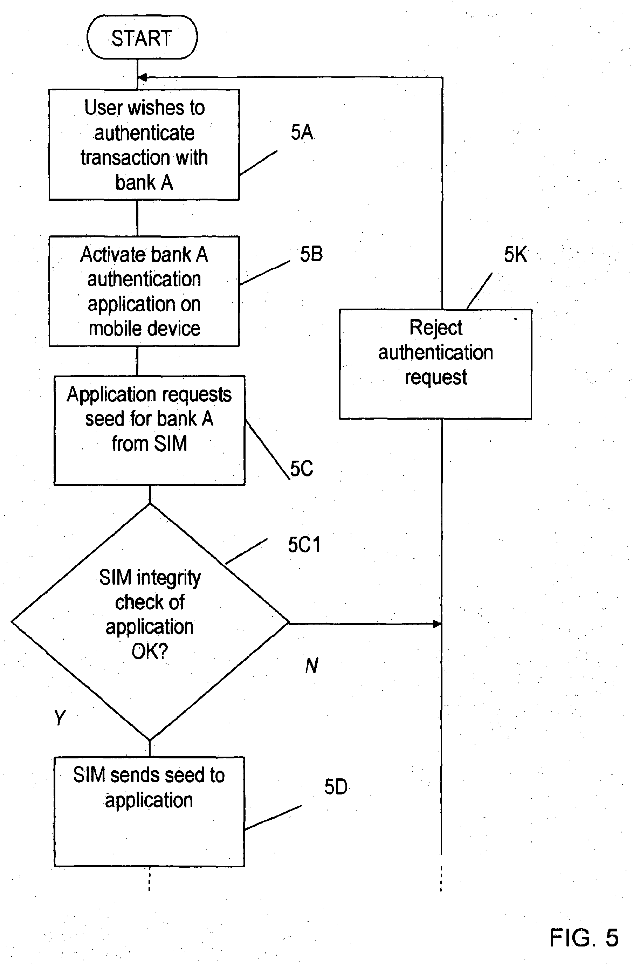

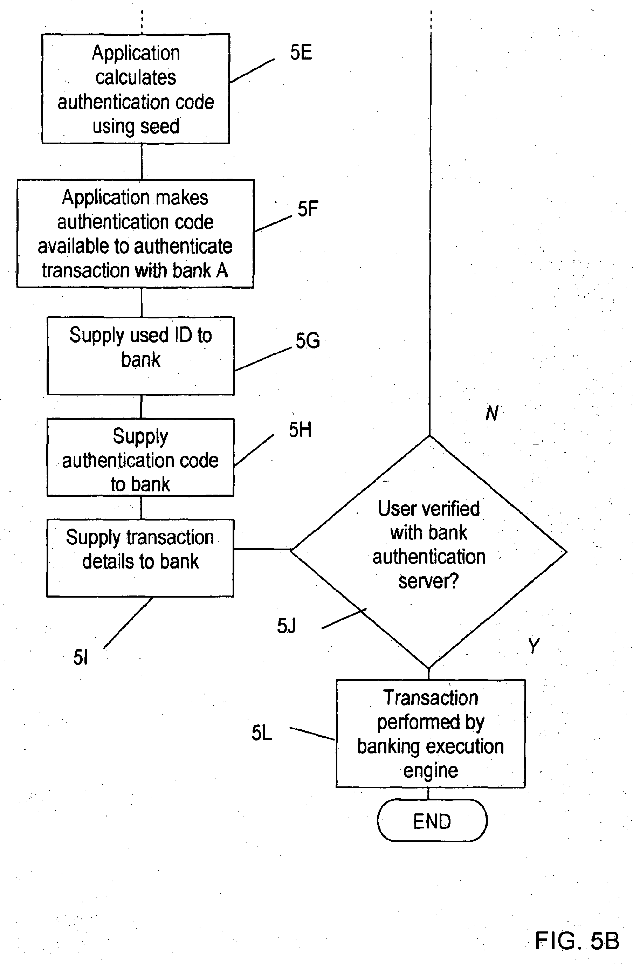

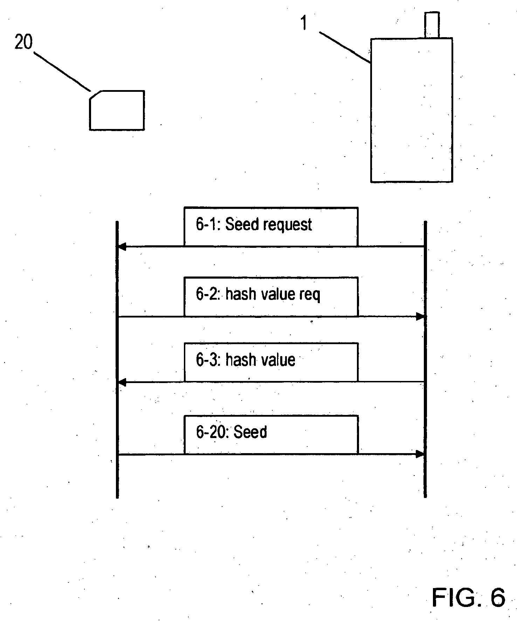

A second embodiment of the invention will now be described with reference to Figures 5 and 6.

In the flow chart of Figure 5A the steps 5A,5B,5C,5D,5E,5F,5G,5H,5I,5J,5K and 5L correspond to the steps designated with the same letter in the flow chart of Figure 3.

That is, briefly, at **step 5A** the user wishes to authenticate a transaction with bank A 30. The user accesses a web page on their personal computer provided by the bank A 30. The web page asks the user to enter their user ID. The user is then prompted to enter an authentication code.

At **step 5B** the user activates application 60A on their mobile device 1 for performing transactions with bank A 30.

At **step 5C** the application 60A generates a seed request message (**message 6-1,** Figure 6) which requests the seed for bank A 30 from the seed store 40A on the SIM 20.

At this point the steps performed differ from those shown in the flow chart of Figure 3. At **step 5C1** the SIM performs an integrity check of the application 60A. The SIM 20 includes an integrity check function 70 (Figure 2) which is configured to receive the seed request message 6-1. The integrity check function 70 of the SIM 20 stores a one or more cryptographic nonces, together with corresponding cryptographic hash values for the combination of a nonce with the application 60A. This hash value is calculated using a hashing algorithm, such as SHA-2. This hash value may be provided to the integrity check function 70 when the application 60A is first provided to the mobile terminal 1. The hash value is a fixed size value that is mathematically related to the application 60A. If the application 60A is altered in any way, the calculated hash value of the application 60A will be different.

If the hash value provided together with the corresponding nonce to the integrity check function 70 is the hash value calculated from the application 60A in the form as issued under control of the bank 30, the integrity check function 70 can be sure that a version of application 60A that, when subjected to the hash function later, produces the same hash value as stored in the integrity check function 70 has not been altered. According to this embodiment of the invention, on receipt of the seed request message 6-1, the integrity check function 70 issues a nonce and hash value request message 6-2 to the mobile device 1. A hash algorithm corresponding to the hash algorithm used to generate the hash value stored in the integrity check function 70 on the SIM 20 is activated on the mobile terminal 1 and calculates the hash value of the combination of the nonce and the application 60A at that time. This hash value is returned to the integrity check function 70 of the SIM 20 in hash value **message 6**-**3**. The integrity check function 70 then compares the hash value received in message 6-3 to the hash value stored for application 60A in the integrity check function 70. If the hash values match, this indicates that the application 60A has not been altered since it was delivered in its authorised form to the mobile terminal 1. The integrity check function 70 is then satisfied that the request for the seed in message 6-1 is a request from legitimate application 60A. The integrity check function 70 then allows the seed to be sent from seed store 40A to the application 60A in reply **message 6-20** (**step 5D).**

If at step 5C1 it is determined that the hash values do not match, then **step 5K** is performed, and the authentication request is rejected. The process then returns to step 5A.

The subsequent steps are the same as the steps designated with the same letter in the flow chart of Figure 3.

Briefly, at **step 5E** the application 60A generates an authentication code for performing a transaction using the seed from the seed store of the SIM 20 and also one or more of the current time and the authentication history data from the previous transaction stored in the authentication history data store 62A.

At **step 5F** the application 60A makes the authentication code available to authenticate the transaction with bank A 30 - for example, the authentication code may be displayed to the user on the display of the mobile terminal 1. The user may then enter this authentication code into the field indicated on the web page on their personal computer 34.

At **step 5G** the user ID of the user is supplied to the bank A 30. At **step 5H** the authentication code entered by the user is supplied to the bank A 30. At **step 5I** the details of the transaction are supplied to the bank A 30.

At **step 5J** the authentication manager 52 of the bank A 30 receives the user ID, authentication code and transaction details. The transaction manager 52 uses the user ID to access records relevant to the user from the database 54, including the seed allocated to that user and one or both of the current time and the authentication history data from the previous transaction of that user. The authentication manager 52 applies this information to an algorithm that corresponds to the algorithm used by the application 60A on the mobile device 1 in order to calculate an authentication code for the present transaction. If the authentication code calculated by the authentication manager 52 and the authentication code received in **step 5H** match, the user is considered to be verified.

If the user is not considered to be verified then, at **step 5K**, the authentication request is rejected and the processor returns to step 5A.

If, on the other hand, at step 3J, the user is considered to be verified, the transaction request is performed by the banking execution engine 50 in response to an authentication approval message received from the authentication manager 52, **step 5L.**

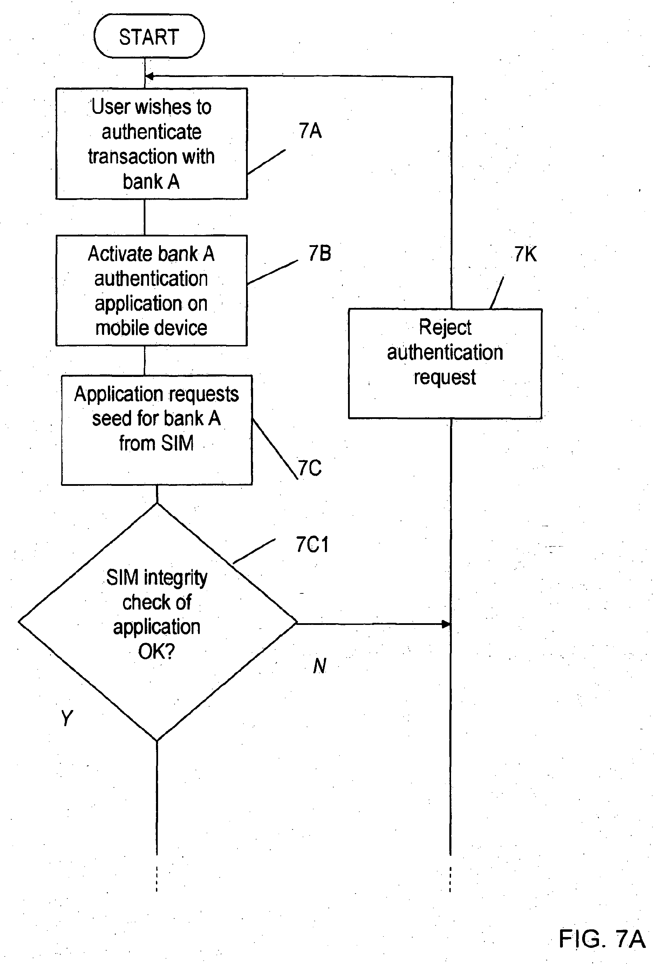

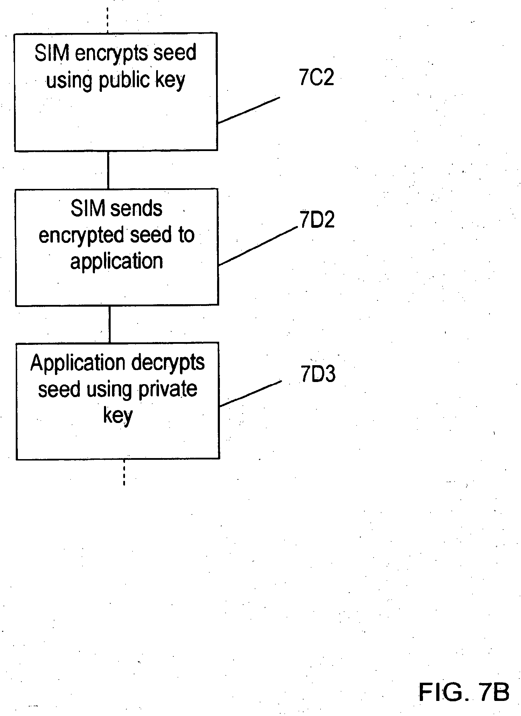

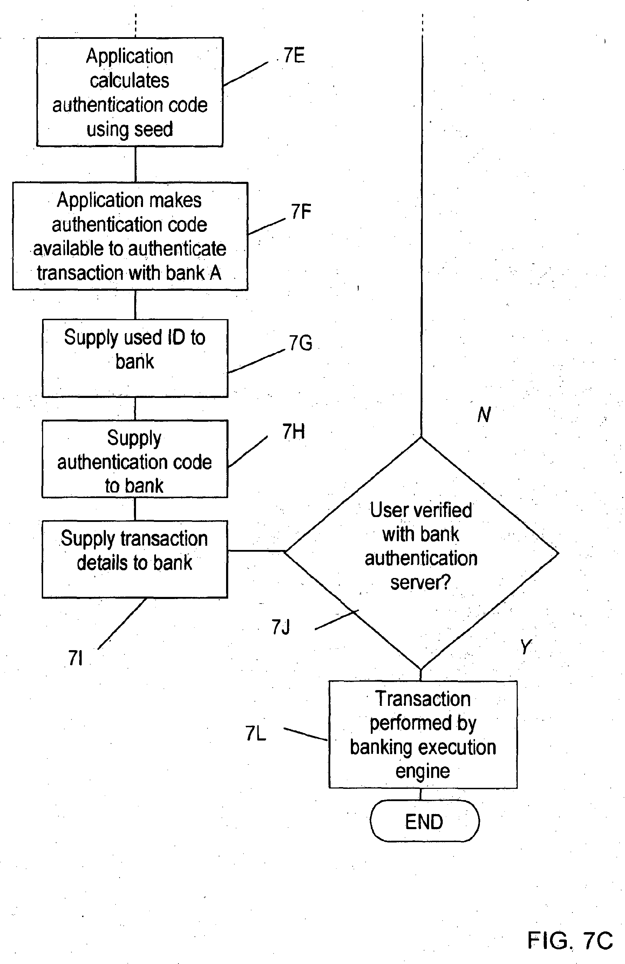

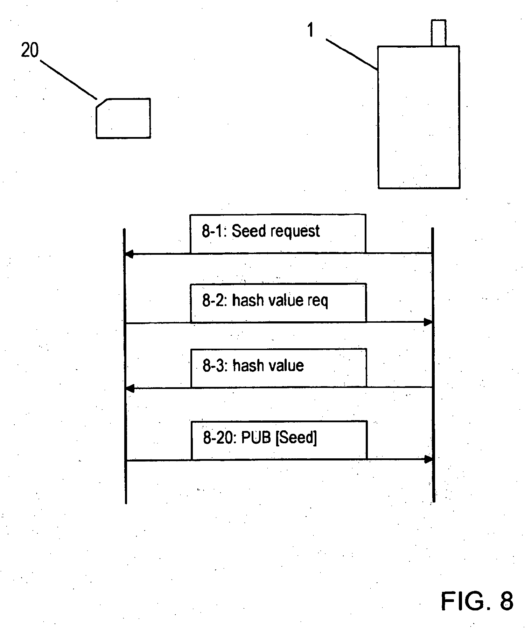

A third embodiment of the invention will now be described with reference to Figures 7 and 8.

Step 7A,7B,7C,7C1,7E,7F,7G,7H,7I,7J,7K and 7L correspond to the similarly lettered steps of the flow chart of Figure 5. These steps will briefly be described.

At **step 7A** the user wishes to authenticate a transaction with bank A 30. The user accesses a web page on their personal computer provided by the bank A 30. The web page asks the user to enter their user ID. The user is then prompted to enter an authentication code.

At **step 7B** the user activates application 60A on their mobile device 1 for performing transactions with bank A 30.

At **step 7C** the application 60A generates a seed request message (**message 8-1,** Figure 8) which requests the seed for bank A 30 from the seed store 40A on the SIM 20.

At **step 7C1** the SIM performs an integrity check of the application 60A. The SIM 20 includes an integrity check function 70 (Figure 2) which is configured to receive the seed request message 8-1. The integrity check function 70 of the SIM 20 stores a hash value of the application 60A.

If the hash value provided to the integrity check function 70 is the hash value calculated from the application 60A in the form as issued under control of the bank 30, the integrity check function 70 can be sure that a version of application 60A that, when subjected to the hash function, produces the same hash value as stored in the integrity check function 70 has not been altered. On receipt of the seed request message 8-1, the integrity check function 70 issues a hash value request **message 8-2** to the mobile device 1 together with a nonce. A hash algorithm corresponding to the hash algorithm used to generate the hash value stored in the integrity check function 70 on the SIM 20 is activated on the mobile terminal 1 and calculates the hash value of the combination of the nonce and the application 60A at that time. This hash value is returned to the integrity check function 70 of the SIM 20 in hash value message 8-3. The integrity check function 70 then compares the hash value received in **message 8-3** to the hash value store for application 60A in the integrity check function 70. If the hash values match, this indicates that the application 60A has not been altered since it was delivered in its authorised form to the mobile terminal 1. The integrity check function 70 is then satisfied that the request for the seed in message 8-1 is a legitimate request from application 60A, the integrity check function 70 then allows the seed to be sent from seed store 40A to the application 60A in reply **message 8-20** (**step 7D**).

At **step 7C2** the procedures performed by the flow chart of Figure 7 differ from the procedures performed by the flow chart of Figure 5. At step 7C2, in response to reception of the request message (message 8-1, Figure 8) from the application 60A, the seed is retrieved from the seed store 40A and is encrypted by the SIM 20 using the public key of a public-private key pair. The encrypted seed is then sent to the application 60A of a mobile terminal 1 in reply **message 8-20.**

At step **7D3 the** seed encrypted with the public key is received by the application 60A. The application 60A uses the private key corresponding to the private key used in step 7D2 to decrypt the encrypted seed and to extract the unencrypted seed from the message 8-20. The public key is provided to the SIM 20 in a secure manner. The private key is provided to the application 60A in a secure manner. As will be known to those skilled in the art, only the application 60A, which knows the private key corresponding to the public key, will be able to decrypt the message 8-20 and extract the seed therefrom. This provides enhanced security. If the message 8-20 is intercepted by an entity other than the application 60A, it will be impossible for that entity to identify the seed without knowledge of the private key.

The subsequent steps are the same as the steps designated with the same letter in the flow chart of Figure 5.

Briefly, at **step 7E** the application 60A generates an authentication code for performing a transaction using the seed from the seed store of the SIM 20 and also one or more of the current time and the authentication history data from the previous transaction stored in the authentication history data store 62A.

At **step 7F** the application 60A makes the authentication code available to authenticate the transaction with bank A 30 - for example, the authentication code may be displayed to the user on the display of the mobile terminal 1. The user may then enter this authentication code into the field indicated on the web page on their personal computer 34.

At **step 7G** the user ID of the user is supplied to the bank A 30. At **step 7H** the authentication code entered by the user is supplied to the bank A 30. At **step 7I** the details of the transaction are supplied to the bank A 30.

At **step 7J** the authentication manager 52 of the bank A 30 receives the user ID, authentication code and transaction details. The transaction manager 52 uses the user ID to access records relevant to the user from the database 54, including the seed allocated to that user and one or both of the current time and the authentication history data from the previous transaction of that user. The authentication manager applies this information to an algorithm that corresponds to the algorithm used by the application 60A on the mobile device 1 in order to calculate an authentication code for the present transaction. If the authentication code calculated by the authentication manager 52 and the authentication code received in step 5H match, the user is considered to be verified.

If the user is not considered to be verified then, at **step 7K**, the authentication request is rejected and the processor returns to step 7A.

If, on the other hand, at **step 7J,** the user is considered to be verified, the transaction request is performed by the banking execution engine 50 in response to an authentication approval message received from the authentication manager 52, **step 7L.**

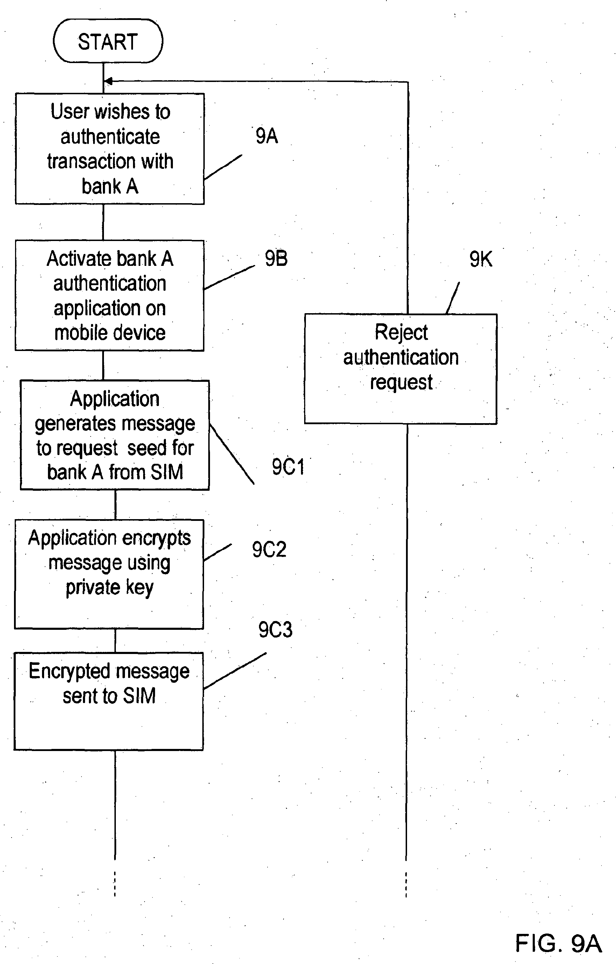

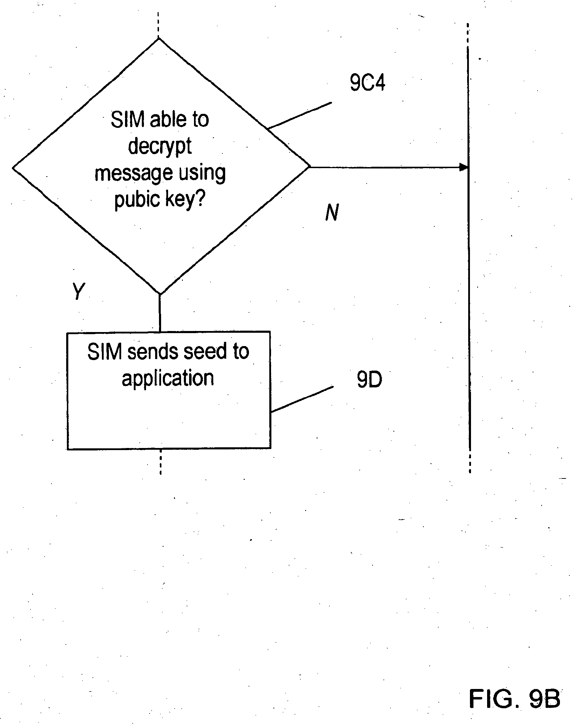

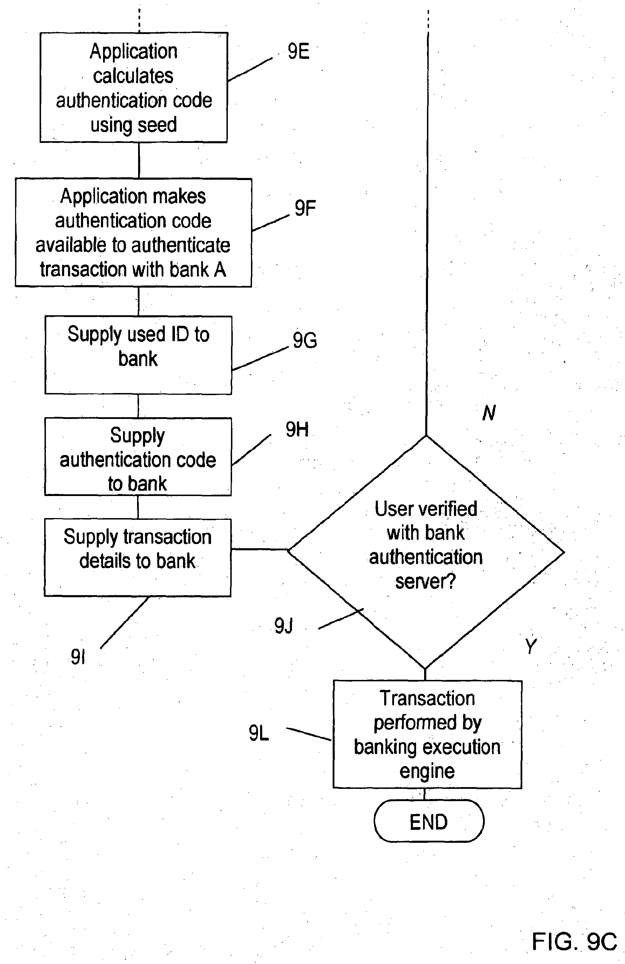

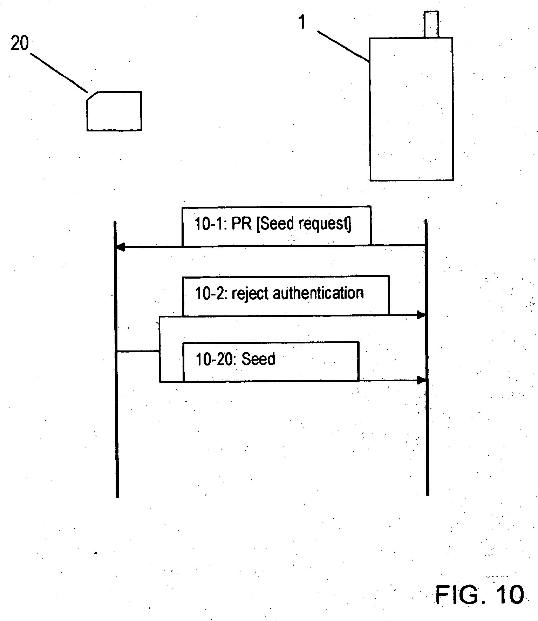

Figures 9 and 10 show a fourth embodiment of the invention.

In the flow chart of Figure 9 steps 9A,9B,9D,9E,9F,9G,9H,9I,9J,9K and 9L correspond to the steps referenced with the same letter of the flow chart of Figure 3A.

At **step 9A** the user wishes to authenticate a transaction with bank A 30. The user accesses a web page on their personal computer 34 provided by the bank A 30. The web page asks the user to enter their user ID. The user is then prompted to enter an authentication code.

At **step 9B** the user activates application 60A on their mobile device 1 for performing transactions with bank A 30.

At **step 9C1** the application 60A generates a message to request a seed for bank A 30 from the seed store 40A on the SIM 20.

At **step 9C2** the application 60A then encrypts this message using a private key of a public-private key pair (which is different to the public-private key pair described above with reference to Figure 7).

At **step 9C3** the encrypted seed request message **(message 10**-**1**, Figure 10) is sent to the SIM 20.

In this embodiment the SIM 20 is provided with message encrypt/decrypt function 72 (Figure 2) which stores the public key corresponding to the private key used in step 9C2. At **step 9C4** the message encrypt/decrypt function 72 attempts to decrypt the message 10-1 sent at step 9C3 using the public key.

If it is not possible to decrypt the message, at step 9K, the SIM issues a reject authentication reply message (**message 10-2**) and the flow chart returns to step 9A.

If the SIM 20 is able to decrypt the message using the public key, at **step 9D,** the SIM 20 sends the seed from the seed store 40A to the application 60A in reply **message 10-20.** The private key is provided to the application 60A in a secure manner. The corresponding public key is provided to the encrypt/decrypt function 72 of the SIM 20 also in a secure manner. If the encrypt/decrypt function 72 of the SIM 20 is able to decrypt the encrypted message 10-1 using the public key, this confirms that the message 10-1 originated from the application 60A and not some other entity (as the application 60A is the only entity that has knowledge of the private key). This enhances security and reduces the likelihood that the SIM 20 will send the seed to an entity other than the application 60A.

The subsequent steps are the same as the steps designated with the same letter in the flow chart of Figure 3.

Briefly, at **step 9E** the application 60A generates an authentication code for performing a transaction using the seed from the seed store of the SIM 20 and one or both of the current time and the authentication history data from the previous transaction stored in the previous authentications code store 62A.

At **step 9F** the application 60A makes the authentication code available to authenticate the transaction with bank A 30 - for example, the authentication code may be displayed to the user on the display of the mobile terminal 1. The user may then enter this authentication code into the field indicated on the web page on their personal computer.

At **step 9G** the user ID of the user is supplied to the bank A 30. At **step 9H** the authentication code entered by the user is supplied to the bank A 30. At **step 9I** the details of the transaction are supplied to the bank A 30.

At **step 9J** the authentication manager 52 of the bank A 30 receives the user ID, authentication code and transaction details. The transaction manager 52 uses the user ID to access records relevant to the user from the database 54, including the seed allocated to that user and one or both of the current time and the authentication history data from the previous transaction of that user. The authentication manager applies this information to an algorithm that corresponds to the algorithm used by the application 60A on the mobile device 1 in order to calculate an authentication code for the present transaction. If the authentication code calculated by the authentication manager 52 and the authentication code received in **step 9H** match, the user is considered to be verified.

If the user is not considered to be verified then, at step 9K, the authentication request is rejected and the processor returns to step 9A.

If, on the other hand, at step 3J, the user is considered to be verified, the transaction request is performed by the banking execution engine 50 in response to an authentication approval message received from the authentication manager 52, step 9L.

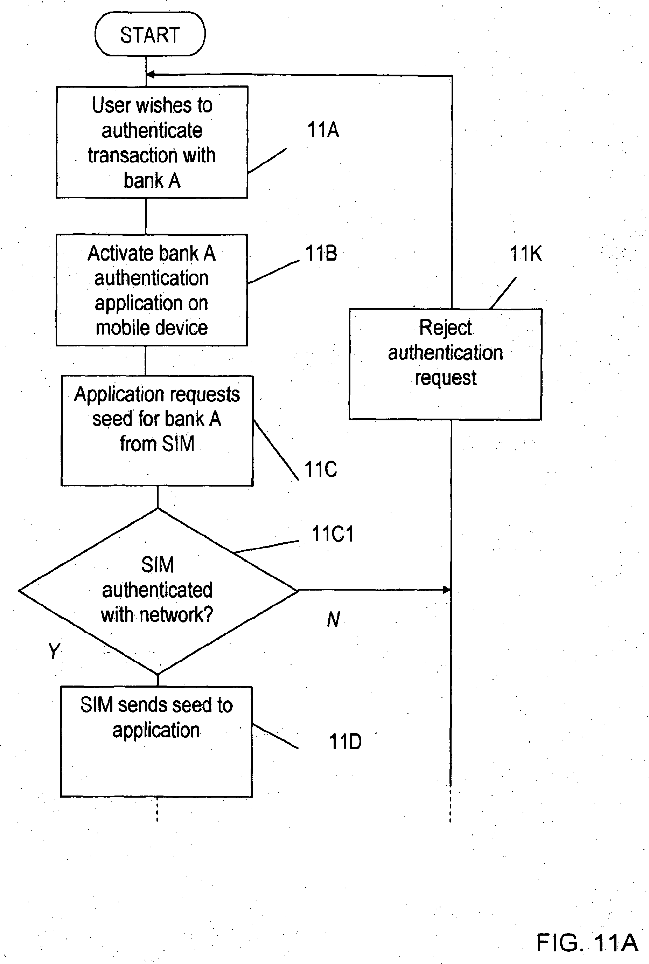

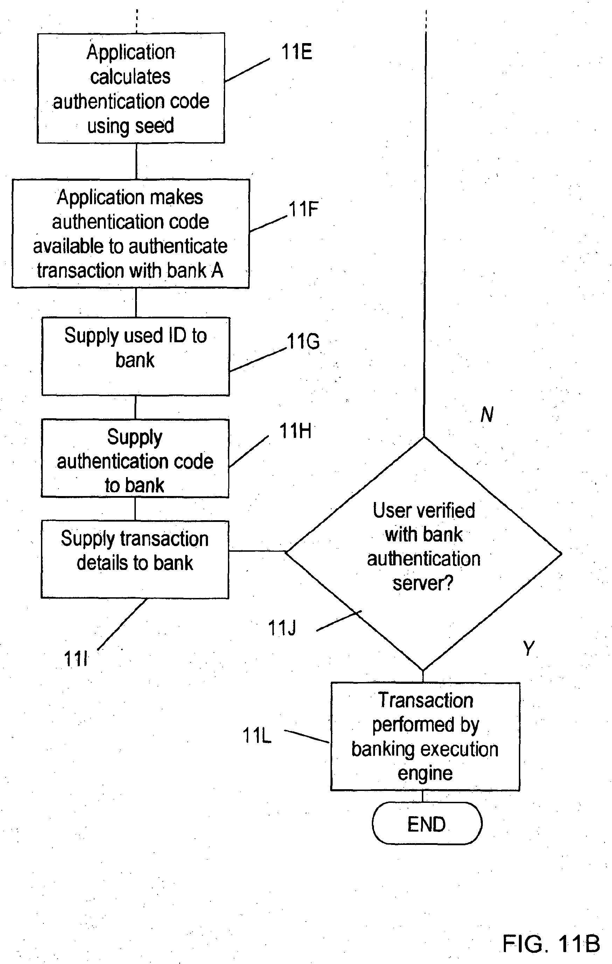

Figure 11 is a flow chart showing a fifth embodiment which is an alternative arrangement to that of Figure 3, and in which a transaction is only allowed to be authenticated if the SIM 20 is authenticated with the network core 22 such that the SIM 20 is registered with the network core 22 to allow telecommunications services to be provided to the mobile device 1. The latter authentication is the conventional SIM authentication performed by mobile terminals operating in accordance with the GSM and UMTS Standards (and other corresponding Standards), and as briefly described above. The procedure may be one where the HLR 10 of the network core 22 sends a challenge to the SIM 20. The SIM 20 then generates a response using an encryption algorithm on the SIM and a unique key Ki on the SIM. The response is transmitted back to the core network 22 and is checked against information held by the core network to determine whether the response is as expected.

At **step 11A** the user wishes to authenticate a transaction with bank A 30. The user accesses a web page on their personal computer 34 provided by the bank A 30. The web page asks the user to enter their user ID. The user is then prompted to enter an authentication code.

At **step 11B** the user activates application 60A on their mobile device 1 for performing transactions with bank A 30.

At **step 11C** the application 60A generates a seed request message (like message 4-1, Figure 4) which requests the seed for bank A 30 from the seed store 40A on the SIM 20.

At **step 11C1** it is determined whether the SIM 20 is authenticated and registered with the network in accordance with a GSM and UMTS Standards (for example) in the conventional manner discussed above. As an additional security measure, even if the SIM 20 is authenticated and registered with the network, the SIM authentication and registration procedure may be repeated at step 11C1 to confirm the SIM authentication status.

If, at step 11C1 it is determined that the SIM 20 is not authenticated (or cannot be re-authenticated), then, at **step 11K**, the transaction is declined by the SIM 20, at step 11K. The user may be informed by the graphical user interface of the mobile terminal 1 of the reason for the transaction being declined.

On the other hand, if, at step 11C1, it is determined that the SIM is authenticated, then **step 11D** is performed.

The subsequent steps are the same as the steps designated with the same letter in the flow chart of Figure 3.

At **step 11D** the seed store 40A provides the seed to the application 60A in reply, in a message like message 4.20.

At **step 11E** the application 60A generates an authentication code for performing a transaction using the seed from the seed store of the SIM 20 and one or both of the current time and authentication history data from the previous transaction and stored in the previous authentications code store 62A.

At **step 11F** the application 60A makes the authentication code available to authenticate the transaction with bank A 30 - for example, the authentication code may be displayed to the user on the display of the mobile terminal 1. The user may then enter this authentication code into the field indicated on the web page on their personal computer 34.

At **step 11G** the user ID of the user is supplied to the bank A 30. At step 11H the authentication code entered by the user is supplied to the bank A 30. At step 11I the details of the transaction are supplied to the bank A 30.

At **step 11J** the authentication manager 52 of the bank A 30 receives the user ID, authentication code and transaction details. The transaction manager 52 uses the user ID to access records relevant to the user from the database 54, including the seed allocated to that user and one or more of the current time and the authentication history data from the previous transaction of that user. The authentication manager 52 applies this information to an algorithm that corresponds to the algorithm used by the application 60A on the mobile device 1 in order to calculate an authentication code for the present transaction. If the authentication code calculated by the authentication manager 52 and the authentication code received in step 11H match, the user is considered to be verified.

If the user is not considered to be verified then, at **step 11K**, the authentication request is rejected and the processor returns to step 11A.

If, on the other hand, at step 11J, the user is considered to be verified, the transaction request is performed by the banking execution engine 50 in response to an authentication approval message received from the authentication manager 52, **step 11L.**

It should be understood that features from the first, second, third, fourth and fifth embodiments can be combined. For example, the SIM integrity check step 5C1 of the second embodiment may be included as an additional step in the fourth or fifth embodiment. Also, step 7C2, step 7D2 and steps 7D3 of the third embodiment in which the seed is encrypted using a public key and decrypted using a private key may be added to the first, second, fourth or fifth embodiments. The SIM authentication requirement (step 11C1) of the fifth embodiment may be added to any of the other embodiments. Various other combinations are also possible, as will be appreciated by those skilled in the art.

Where steps have been described which use a corresponding public and private key, the public/private key pair could be replaced by a common shared key used in each of the steps.

Although in the embodiments described the transaction is performed by a user operating their personal computer 34 and entering their user ID and authentication code onto a web page provided by the bank (the authentication code being copied from the display of the mobile terminal 1), it is possible that the transaction may be performed using the mobile terminal 1. For example, the user may access the bank's website using web browser provided on the mobile terminal 1, and may enter the user ID into this web browser (or alternatively the web page could be pre-populated with the user ID). Conveniently, when the authentication code is calculated by the authentication code calculator 60A, rather than being displayed on the display of the mobile terminal 1, this could be automatically supplied to the web page, and the user ID and authentication code automatically transmitted to the bank without requiring any manual operations by the user, other than supplying the transaction details.

The applications 60A,60B and 60C may be installed on mobile device 1 prior to distribution to the user. Alternatively, any or all of these applications may be wholly or partially installed by over the air transmission from the network core 22.

In the embodiments described above, the SIM 20 is a physical SIM in the form of a smart card of the type found in conventional cellular telecommunications devices. As an alternative to such a form of SIM, the SIM may be a simulation of a cellular telecommunications network SIM - that is, a software program that performs the same function as a cellular telecommunications network SIM but which does not have the physical form of a cellular telecommunications network SIM. For example, the simulation of a SIM could be a computer program that is capable of receiving the "challenge" described above from the network core 22 and calculating a suitable "response" of the type mentioned above. The simulated SIM will also perform the functionality of the seed store 40A,B,C, and integrity check function and message encrypt/decrypt function if necessary. The simulated SIM may, for example, be provided by a laptop computer and will allow the laptop computer to obtain telecommunications services from a cellular telecommunications network.

Authentication may be performed by:
- Current time
- Authentication history data
- Both current time and authentication history data

If only current time is used (and not authentication history data), then the authentication history data stores 62A, 62B, 62C can be dispensed with, and the database 54 need not store authentication history data.

If the current time is used for authentication, the current time may be provided to the mobile device 1 from time information available from the network. Advantageously, the authentication manager 52 also uses the same time source, so the times will be sychronised.

### REFERENCE SIGN LIST

- 1:: mobile terminal
- 2:: MSC
- 3:: base station
- 4:: base station
- 5:: base station
- 6:: MSC
- 7:: base station
- 8:: base station
- 9:: base station
- 10:: HLR
- 11:: VLR
- 14:: VLR
- 16:: SGSN
- 18:: SGSN
- 20:: SIM
- 22:: Core network
- 30:: bank A
- 32:: internet
- 34:: personal computer
- 40A:: seed store
- 40B:: second seed store
- 40C:: third seed store
- 50:: banking execution engine
- 52:: authentication manager
- 54:: database
- 60A:: authentication code calculator
- 60B:: second authentication code calculator
- 60C:: third authentication code calculator
- 62A:: previous authentication code store
- 62B:: second previous authentication code store
- 62C:: third previous authentication code store
- 70:: integrity check function
- 72:: message encrypt / decrypt function

## Claims

1. Apparatus for authenticating a transaction between a user and an entity (30), the apparatus including cellular telecommunications network subscriber identity module, SIM, means (20) adapted to store a seed for generating an authentication code which is usable to authenticate the transaction, and a mobile telecommunications device (1) having a processor including authentication means operable to obtain the seed from the SIM means (20), to calculate the authentication code and to generate a transaction message for enabling the transaction with the entity, the transaction message including the authentication code, wherein the SIM means (20) is operable to be registered with the cellular telecommunications network for which the user has a mobile telecommunications device (1) and includes information which is usable to authenticate the user's mobile telecommunications device (1) with the cellular telecommunications network to obtain telecommunications services therefrom, **characterised in that** the apparatus is operable to only provide the seed when the SIM means (20) is registered with the cellular telecommunications network.

2. The apparatus of claim 1, including a store for storing authentication history data from a previous transaction, and wherein the authentication means is operable to calculate the authentication code which is derived from the seed and the authentication history data.

3. The apparatus of claim 1 or 2, wherein the authentication means is operable to calculate the authentication code which is derived from the seed and the current time.

4. The apparatus of claim 1, 2 or 3, wherein the SIM means is operable to verify the integrity of the authentication means.

5. The apparatus of claim 4 wherein the authentication means is operable to generate a cryptographic hash value for facilitating integrity verification.

6. The apparatus of claim 1,2,3,4, or 5, wherein the SIM means includes means operable to encrypt the seed and the authentication means includes means for decrypting the seed.

7. The apparatus of any one of claims 1 to 6, wherein the SIM means is operable to receive and verify a send request message prior to providing the seed to the authentication means.

8. The apparatus of any one of claims 1 to 7, wherein the SIM means is operable to receive a challenge message from the cellular telecommunications network and for generating a corresponding response message for transmitting to the cellular telecommunications network for authenticating the user's mobile telecommunications device with the cellular telecommunications network.

9. A method of authenticating a transaction between a user and an entity (30), the method including operating a mobile telecommunications device (1) of the user to obtain a seed from an associated cellular telecommunications network subscriber identity module, SIM, means (20), calculating an authentication code derived from the seed, and generating a transaction message for enabling the transaction with the entity, the transaction message including the authentication code, wherein the SIM means (20) is registerable with the cellular telecommunications network for which the user has the mobile telecommunications device (1) and includes the information which is used to authenticate the user's mobile telecommunications device (1) with the cellular telecommunications network to obtain telecommunications services therefrom and **characterised in that** the SIM means (20) only provides the seed when the SIM means (20) is registered with the cellular telecommunications network.

10. The method of claim 9, including calculating the authentication code based on at least one of:
the seed and authentication history data generated for a previous transaction; and
the seed and the current time.

11. The method of claim 9 or 10 including operating the SIM means to verify the integrity of the mobile telecommunications device and only providing the seed to the mobile telecommunications device if the integrity is verified.

12. The method of claim 11, wherein the verification step includes generating a cryptographic hash value relating to an application on the mobile telecommunications device and comparing this to a pre-calculated hash value stored on the SIM means.

13. The method of any one of claims 9, 10, 11 or 12, including at least one of the steps:
the SIM means encrypts the seed and the authentication means decrypts the seed; and
the SIM means receives and verifies a seed request message prior to providing the seed to the mobile telecommunications device.

14. The method of any one of claims 9 to 13, wherein the SIM means receives a challenge message from the cellular telecommunications network and generates a corresponding response message for transmitting to the cellular telecommunications network to authenticate the users mobile telecommunications device with the cellular telecommunications network.

## Patentansprüche

1. Vorrichtung zum Authentifizieren einer Transaktion zwischen einem Benutzer und einer Entität (30), wobei die Vorrichtung zellulare Telekommunikationsnetz-SIM-(Subscriber Identity Module)-Mittel (20) zum Speichern eines Startwerts (Seed) zum Erzeugen eines Authentifizierungscode, der zum Authentifizieren der Transaktion benutzt werden kann, und ein mobiles Telekommunikationsgerät (1) mit einem Prozessor mit Authentifizierungsmitteln zum Einholen des Startwerts von dem SIM-Mittel (20), zum Berechnen des Authentifizierungscode und zum Erzeugen einer Transaktionsnachricht beinhaltet, um die Transaktion mit der Entität zu ermöglichen, wobei die Transaktionsnachricht den Authentifizierungscode beinhaltet, wobei das SIM-Mittel (20) zum Registrieren bei dem zellularen Telekommunikationsnetz ausgelegt ist, für das der Benutzer ein mobiles Telekommunikationsgerät (1) hat, und Informationen beinhaltet, die zum Authentifizieren des mobilen Telekommunikationsgeräts (1) des Benutzers bei dem zellularen Telekommunikationsnetz benutzt werden kann, um Telekommunikationsdienste davon zu erhalten, **dadurch gekennzeichnet, dass** die Vorrichtung so ausgelegt ist, dass sie den Startwert nur dann bereitstellt, wenn das SIM-Mittel (20) bei dem zellularen Telekommunikationsnetz registriert ist.

2. Vorrichtung nach Anspruch 1, die einen Speicher zum Speichern von Authentifizierungshistoriendaten von einer vorherigen Transaktion beinhaltet, und wobei das Authentifizierungsmittel die Aufgabe hat, den Authentifizierungscode zu berechnen, der vom Startwert und den Authentifizierungshistoriendaten abgeleitet ist.

3. Vorrichtung nach Anspruch 1 oder 2, wobei das Authentifizierungsmittel die Aufgabe hat, den Authentifizierungscode zu berechnen, der vom Startwert und der aktuellen Zeit abgeleitet ist.

4. Vorrichtung nach Anspruch 1, 2 oder 3, wobei das SIM-Mittel die Aufgabe hat, die Integrität des Authentifizierungsmittels zu verifizieren.

5. Vorrichtung nach Anspruch 4, wobei das Authentifizierungsmittel die Aufgabe hat, einen kryptografischen Hash-Wert zum Erleichtern der Integritätsverifizierung zu erzeugen.

6. Vorrichtung nach Anspruch 1, 2, 3, 4 oder 5, wobei das SIM-Mittel Mittel zum Verschlüsseln des Startwerts beinhaltet und das Authentifizierungsmittel Mittel zum Entschlüsseln des Startwerts beinhaltet.

7. Vorrichtung nach einem der Ansprüche 1 bis 6, wobei das SIM-Mittel die Aufgabe hat, vor dem Senden des Startwerts zu dem Authentifizierungsmittel eine Sendeanforderungsenachricht zu empfangen und zu verifizieren.

8. Vorrichtung nach einem der Ansprüche 1 bis 7, wobei das SIM-Mittel die Aufgabe hat, eine Challenge-Nachricht von dem zellularen Telekommunikationsnetz zu empfangen und eine entsprechende Antwortnachricht zum Übertragen zum zellularen Telekommunikationsnetz zum Authentifizieren des mobilen Telekommunikationsgeräts des Benutzers bei dem zellularen Telekommunikationsnetz zu erzeugen.

9. Verfahren zum Authentifizieren einer Transaktion zwischen einem Benutzer und einer Entität (30), wobei das Verfahren das Betreiben eines mobilen Telekommunikationsgeräts (1) des Benutzers zum Einholen eines Startwerts von einem assoziierten zellularen Telekommunikationsnetz-SIM-(Subscriber Identity Module)-Mittel (20), zum Berechnen eines vom Startwert abgeleiteten Authentifizierungscode und zum Erzeugen einer Transaktionsnachricht zum Ermöglichen der Transaktion mit der Entität beinhaltet, wobei die Transaktionsnachricht den Authentifizierungscode beinhaltet, wobei das SIM-Mittel (20) bei dem zellularen Telekommunikationsnetz registriert werden kann, für das der Benutzer das mobile Telekommunikationsgerät (1) hat, und die Informationen beinhaltet, die zum Authentifizieren des mobilen Telekommunikationsnetzes (1) des Benutzers bei dem zellularen Telekommunikationsnetz benutzt wird, um Telekommunikationsdienste davon zu erhalten, und **dadurch gekennzeichnet, dass** das SIM-Mittel (20) den Startwert nur dann bereitstellt, wenn das SIM-Mittel (20) bei dem zellularen Telekommunikationsnetz registriert ist.

10. Verfahren nach Anspruch 9, das das Berechnen des Authentifizierungscode auf der Basis von wenigstens einem der Folgenden beinhaltet:
dem Startwert und den für eine vorherige Transaktion erzeugten Authentifizierungshistoriendaten; und
dem Startwert und der aktuellen Zeit.

11. Verfahren nach Anspruch 9 oder 10, das das Betreiben des SIM-Mittels zum Verifizieren der Integrität des mobilen Telekommunikationsgeräts und des Senden des Startwerts zu dem mobilen Telekommunikationsgerät nur dann beinhaltet, wenn die Integrität verifiziert ist.

12. Verfahren nach Anspruch 11, wobei der Verifizierungsschritt das Erzeugen eines kryptografischen Hash-Wertes in Bezug auf eine Anmeldung auf dem mobilen Telekommunikationsgerät und das Vergleichen desselben mit einem auf dem SIM-Mittel gespeicherten vorberechneten Hash-Wert beinhaltet.

13. Verfahren nach Anspruch 9, 10, 11 oder 12, das wenigstens einen der folgenden Schritte beinhaltet:
das SIM-Mittel verschlüsselt den Startwert und das Authentifizierungsmittel entschlüsselt den Startwert; und
das SIM-Mittel empfängt und verifiziert eine Startwertanforderungsnachricht vor dem Senden des Startwerts zu dem mobilen Telekommunikationsgerät.

14. Verfahren nach einem der Ansprüche 9 bis 13, wobei das SIM-Mittel eine Challenge-Nachricht von dem zellularen Telekommunikationsnetz empfängt und eine entsprechende Antwortnachricht zum Senden zu dem zellularen Telekommunikationsnetz erzeugt, um das mobile Telekommunikationsgerät des Benutzers bei dem zellularen Telekommunikationsnetz zu authentifizieren.

## Revendications

1. Appareil pour authentifier une transaction entre un utilisateur et une entité (30), l'appareil incluant un moyen à module d'identité d'abonné, SIM, (20) d'un réseau de télécommunications cellulaires conçu pour stocker un germe destiné à générer un code d'authentification qui est utilisable pour authentifier la transaction, et un dispositif de télécommunications mobile (1) lequel possède un processeur incluant un moyen d'authentification exploitable de façon à obtenir le germe à partir du moyen à SIM (20), à calculer le code d'authentification et à générer un message de transaction afin de valider la transaction avec l'entité, le message de transaction incluant le code d'authentification, cas dans lequel le moyen à SIM (20) est exploitable de façon à être enregistré auprès du réseau de télécommunications cellulaires pour lequel l'utilisateur possède un dispositif de télécommunications mobile (1) et incluant des informations qui sont utilisables pour authentifier le dispositif de télécommunications mobile (1) de l'utilisateur auprès du réseau de télécommunications cellulaires afin d'obtenir des services de télécommunications à partir de celui-ci, **caractérisé en ce que** l'apareil est exploitable de façon à uniquement fournir le germe lorsque le moyen à SIM (20) est enregistré auprès du réseau de télécommunications cellulaires.

2. Appareil selon la revendication 1, incluant un dispositif de stockage pour stocker des données historiques d'authentification provenant d'une transaction antérieure, et le moyen d'authentification étant exploitable de façon à calculer le code d'authentification qui est dérivé à partir du germe et des données historiques d'authentification.

3. Appareil selon la revendication 1 ou 2, le moyen d'authentification étant exploitable de façon à calculer le code d'authentification qui est dérivé à partir du germe et de l'horaire actuel.

4. Appareil selon la revendication 1, 2 ou 3, le moyen à SIM étant exploitable de façon à vérifier l'intégrité du moyen d'authentification.

5. Appareil selon la revendication 4, le moyen d'authentification étant exploitable de façon à générer une valeur de hachage cryptographique afin de faciliter la vérification de l'intégrité.

6. Appareil selon la revendication 1, 2, 3, 4, ou 5, le moyen à SIM incluant un moyen exploitable de façon à crypter le germe, et le moyen d'authentification incluant un moyen pour décrypter le germe.

7. Appareil selon l'une quelconque des revendications 1 à 6, le moyen à SIM étant exploitable de façon à recevoir et à vérifier un message de requête d'envoi avant de fournir le germe au moyen d'authentification.

8. Appareil selon l'une quelconque des revendications 1 à 7, le moyen à SIM étant exploitable de façon à recevoir un message d'interrogation à partir d'un réseau de télécommunications cellulaires et à générer un message de réponse correspondant en vue d'une transmission au réseau de télécommunications cellulaires afin d'authentifier le dispositif de télécommunications mobile de l'utilisateur auprès du réseau de télécommunications cellulaires.

9. Procédé d'authentification d'une transaction entre un utilisateur et une entité (30), le procédé incluant les opérations consistant à exploiter un dispositif de télécommunications mobile (1) de l'utilisateur de façon à obtenir un germe à partir d'un moyen à module d'identitié d'abonné, SIM, (20) d'un réseau de télécommunications cellulaires associé, à calculer un code d'authentification dérivé à partir du germe, et à générer un message de transaction afin de valider la transaction avec l'entité, le message de transaction incluant le code d'authentification, cas dans lequel le moyen à SIM (20) est apte à être enregistré auprès du réseau de télécommunications cellulaires pour lequel l'utilisateur possède un dispositif de télécommunications mobile (1) et incluant des informations qui sont utilisables pour authentifier le dispositif de télécommunications mobile (1) de l'utilisateur auprès du réseau de télécommunications cellulaires afin d'obtenir des services de télécommunications à partir de celui-ci, et **caractérisé en ce que** le moyen à SIM (20) fournit uniquement le germe lorsque le moyen à SIM (20) est enregistré auprès du réseau de télécommunications cellulaires.

10. Procédé selon la revendication 9, incluant le calcul du code d'authentification sur la base d'au moins un des éléments suivants :
le germe et les données historiques d'authentification générés pour une transaction antérieure ; et
le germe et l'horaire actuel.

11. Procédé selon la revendication 9 ou 10 incluant l'exploitation du moyen à SIM de façon à vérifier l'intégrité du dispositif de télécommunications mobile et à uniquement fournir le germe au dispositif de télécommunications mobile si l'intégrité a été vérifiée.

12. Procédé selon la revendication 11, l'étape de vérification incluant la génération d'une valeur de hachage cryptographique relative à une application sur le dispositif de télécommunications mobile et la comparaison de celle-ci avec une valeur de hachage pré-calculée stockée sur le moyen à SIM.

13. Procédé selon l'une quelconque des revendications 9, 10, 11 ou 12, incluant au moins l'une des étapes suivantes :
le moyen à SIM crypte le germe et le moyen d'authentification décrypte le germe ; et
le moyen à SIM reçoit et vérifie un message de requête de germe avant de fournir le germe au dispositif de télécommunications mobile.

14. Procédé selon l'une quelconque des revendications 9 à 13, le moyen à SIM recevant un message d'interrogation à partir du réseau de télécommunications cellulaires et générant un message de réponse correspondant en vue d'une transmission au réseau de télécommunications cellulaires afin d'authentifier le dispositif de télécommunications mobile de l'utilisateur auprès du réseau de télécommunications cellulaires.
